# EUROPÄISCHE PATENTSCHRIFT

(11) **EP 2 474 373 B1**
(45) Veröffentlichungstag und Bekanntmachung des Hinweises auf die Patenterteilung: **18.12.2013**
(21) Anmeldenummer: 12162838.2
(22) Anmeldetag: 28.08.2009
(51) Int. Cl.: B22C 1/22, C09K 17/28, C09K 17/40, C09K 8/575, C09K 8/508, C09K 8/512, C04B 26/12

(54) **Verfahren zum Stabilisieren unterirdischer Formationen mit härtbaren Harnstoff-Formaldehyd-Harzen**
METHOD FOR Stabilising a subterranean formation using curable urea-formaldehyde resins
MÉTHODE POUR stabiliser une formation souterraine utilisant des résines d'urée-formol durcissables

(30) Priorität: 29.08.2008 EP 08163293
(43) Veröffentlichungstag der Anmeldung: 11.07.2012
(62) Teilanmeldung aus: 09782317.3
(73) Patentinhaber: BASF SE, 67056 Ludwigshafen (DE)
(72) Erfinder: Nitschke, Christian, 67346 Speyer (DE); Spindler, Christian, 67061 Ludwigshafen (DE)

(56) Entgegenhaltungen:
- DE-B- 1 012 035
- US-A1- 2003 230 431
- WASNIK A ET AL: "Application of Resin System for Sand Consolidation, Mud-Loss Control, and Channel Repairing", SPE/PS-CIM/CHOA INTERNATIONAL THERMAL OPERATIONS AND HEAVY OIL SYMPOSIUM, CALGARY, ALBERTA, CANADA, SOCIETY OF PETROLEUM ENGINEERS, US, Bd. 1, Nr. SPE 97771-MS 2005, 1. November 2005 (2005-11-01), Seiten 424-434, XP008115233,

## Beschreibung

Die vorliegende Erfindung betrifft ein Verfahren zum Stabilisieren unterirdischer Formationen aus oxidischen anorganischen Materialien, wobei man härtbaren Formulierungen, die veretherte Harnstoff-Formaldehyd-Harze umfassen in die unterirdische Formation injiziert und unter den in der Formation herrschenden Temperaturen aushärtet.

Bei der Exploration von Öl und Gas werden Kohlenwasserstoffe bzw. die üblichen Kohlenwasserstoff-Wasser-Gemische oft in unkonsolidierten Sand- und Gesteinsschichten gefunden. Bei der Förderung können mit dem Kohlenwasserstoff-Wasser-Gemisch Sandpartikel durch die bei der Produktion auftretenden Scherkräfte aus der Steinformation ausgetragen werden. Die Sandpartikel können beispielsweise in den Produktionsstrang, in untertägige und auf der Oberfläche angebrachte Pumpvorrichtungen sowie in installierte Wasserabscheider und Pipelinesysteme eindringen und dort zu Korrosion, Abrieb oder zu Funktionsstörungen oder Funktionsminderungen führen.

Weiterhin ist bekannt, Produktionsbohrungen durch Aufbrechen von kohlenwasserstoffhaltigem Gestein zu stimulieren (so genanntes Fracturing). Um die erzeugten Risse auch unter Produktionsbedingungen über einen längeren Zeitraum offen zu halten, werden in die erzeugten Risse ein Stützmaterialien wie beispielsweise Sande oder Bauxitpartikel verpumpt. Auch solche Partikel können ebenfalls wie beschrieben aus dem Spalt ausgetragen werden. Neben den oben beschriebenen Problemen kann dies zusätzlich dazu führen, dass die im Gestein gebildeten Risse sich wieder schließen und die Förderrate des produzierten Kohlenwasserstoffs signifikant abfällt.

Im Stand der Technik sind verschiedene Techniken bekannt, um den Austrag von Sand zusammen mit dem Kohlenwasserstoff-Wasser-Gemisch aus der Formation in das Bohrloch, den anschließenden Produktionsstrang und die verwendete Ausrüstung zu verhindern.

So können zum Beispiel in der Produktionsbohrung Kiespackungen und mechanische Sandfilter installiert werden, um den Transport von Sand aus dem Bohrloch zu unterbinden. Derartige Systeme sind beispielsweise in CA 2,314,392 oder US 2008/217 002 A1 beschrieben.

Zum anderen kann ein dünnflüssiges Harz in die unkonsolidierte Sandschicht verpumpt und dort ausgehärtet werden. Bei den nach dem Stand der Technik beschriebenen Systemen kann je nach der Temperatur im Bohrloch ein passender Härter, beispielsweise ein organisches Amin zugesetzt. Das Harz kann zusammen mit dem Härter direkt als Flüssigkeit oder aufgebracht auf einen Träger, wie z.B. kleine Sandpartikel in die Formation verpumpt werden. Das Harz verklebt dabei die in der Formation vorhandenen Sandkörner punktuell, so dass die Sandkörner nicht mehr ausgetragen werden können, es aber dennoch dem Kohlenwasserstoff möglich ist, den nun konsolidierten Sand zu durchfließen.

Das ausgehärtete Harz muss über einen langen Zeitraum im Bohrloch bei den herrschenden Lagerstättentemperaturen gegen Hydrolyse stabil sein und darf auch durch den geförderten Kohlenwasserstoff nicht angelöst werden.

So beschreiben beispielsweise GB 1,172,116 oder GB 1,453,001 den Einsatz von Furfurylalkohol basierten Harzsystemen, die in einem organischen Lösemittel in die Formation verpumpt werden. DE 28 43 452 und CA 2 637 696 beschreiben auf Epoxidharzen basierende Systeme.

Auch in anderen Bereichen der Technik besteht Bedarf, anorganische Partikel mittels geeigneter Maßnahmen zu festigen, wie beispielsweise im Bergbau, um die Loslösung von Lockergestein im Vortrieb zu verhindern oder aber Gestein vor Verwitterung bzw. Oxidation zu schützen. So beschreibt beispielsweise CA 2 497 722 die Verwendung zweikomponentiger elastomerer Harzsysteme, die auf die Oberfläche des Gesteins aufgetragen werden und dort zur Filmbildung führen.

Weitere Beispiele umfassen die Verhinderung von Staubentwicklung oder die Verfestigung von Böden. So beschreibt RU 2151301 die Verhinderung von Staubentwicklung durch Binden des Staubes mit Polyvinylbutyral und Sand.

Die Verfestigung von Sand in oberirdischen Anwendungen ist ebenfalls von großem technischen Interesse. So werden beispielsweise Formkörper, auch Molds genannt, für verschiedenste Anwendungen, beispielsweise zum Metallguss aus Sand unter Zuhilfenahme von Klebstoffen hergestellt. So beschreiben die Anmeldungen CN 1075114 A, DE 24 00 908, DE 1012035 und JP 02 197 348 A2 die Anwendung von Harnstoff-Formaldehyd Harzen zur Herstellung von Formkörpern, wobei unterschiedliche Molverhältnisse von Harnstoff zu Formaldehyd und verschiedene Härter eingesetzt werden.

Es ist weiterhin bekannt, zur Verbesserung der Anwendungseigenschaften solcher Fornkörper weitere Additive zuzusetzen, beispielsweise Furfurylalkohol (DE 1160141), die Umsetzung von Harnstoff-Formaldehyd-Harzen zu Sulfonaten (Yang, Ming et al. Beijing Huagong Daxue Xuebao, Ziran Kexueban (2003), 30(4), 81 - 84) oder der Zusatz von phenolhaltigen Additiven (CS 247931).

Die Verfestigung von Sandschichten, sowohl über- wie untertage durch Harnstoff-Formaldehyd Systeme wird von US 2006/240995, US 6,311,773, RU 2048950 und US 5,670,567 offenbart.

A. Wasnik, S. Mete und B. Ghosh "Application of Resin System for Sand Consolidation, Mud - Loss Control, and Channel Repairing", SPE/PS - CIM/CHOA International ThermalOperations and Heavy Oil Symposium, Calgary, Alberto, Canada, Society of Petroleum Engineers, US, Bd. 1, SPE 97771-MS, 1.11.2005, Seiten 424 bis 434 offenbaren Verfahren zur Sandstabilisierung beim Bohren in Öl- und Gasformationen unter Verwendung härtbarer Harze, indem man die härtebaren Harze in die zur stabilirende Sandschicht einpresst und thermisch härtet. Bei den Harzen handelt es sich um Harstoff-Formaldehyd-Harze oder um Melamin-Formaldehyd-Harze, welche unter Verwendung von Metallsalzen oder Säuren als Härtern ausgehärtet werden können. Die Untersuchungen zeigen beispielsweise, dass die Sandschichten durch das Harz mechanisch stabilisiert werden und dass die Permeabilität der Sandschicht für Bohrflüssigkeit abnimmt.

US 2003/0230431 A1 offenbart ein Verfahren zum Stabilisieren von labilen Zonen oder von Formationen aus Sandstein, Tonen, Schiefer oder ähnlichen. Materialien beim Bohren, um das Einstehen von (zu viel) feinem Material zu vermeiden. Die Stabilisierung erfolgt mithilfe der Bohrflüssigkeit, welche einen pH-Wert von 6-10 aufweist, sowie Wasser, einen polymeren kationischen Katalysator, ein vernetzbares Polymer sowie ein wasserlösliches oder wasserdispergierbares thermisch härtbares Harz umfasst, wobei die Härtung durch den Katalysator katalysiert wird.

Aufgabe der Erfindung war es, ein verbessertes Verfahren zum Stabilisieren unterirdischer Formationen zu finden. Hierbei sollten bevorzugt Harze auf Wasserbasis eingesetzt werden.

Dementsprechend wurde ein Verfahren zum Binden von nicht-masssiven oxidischen anorganischen Materialien ausgewählt aus der Gruppe von
- Materialien, welche Partikel aus oxidischen anorganischen Materialien umfassen, sowie
- oxidischen anorganischen Materialien, welche Poren, Risse, Brüche oder Spalten aufweisen,
   gefunden, wobei man die anorganischen Materialien mit einer härtbaren Zusammensetzung umfassend mindestens ein härtbares Harz in Kontakt bringt, gefolgt von thermischem Aushärten des Harzes, und wobei es sich bei dem Harz um ein verethertes Harnstoff-Formaldehyd-Harz handelt, welches Struktureinheiten der allgemeinen Formel (II) oder (I) und (II). 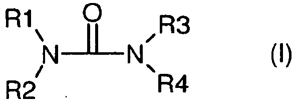 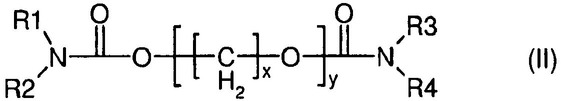 umfasst, wobei
   - die Reste R1, R2, R3 und R4 für Substituenten ausgewählt aus der Gruppe von H, -CH₂-OH und -CH₂-OR stehen,
   - R' für einen aliphatischen Kohlenwasserstoffrest mit 1 bis 10 Kohlenstoffatomen,
   - x für eine Zahl von 2 bis 8, und
   - y für eine Zahl von 1 bis 20
mit der Maßgabe, dass es sich bei mindestens einem der Reste R1, R2, R3 und R4 um einen Rest-CH₂-OR' handelt,
wobei man das Aushärten bei einer Temperatur von größer 0°C bis 280°C vornimmt, und wobei es sich um ein Verfahren zum Stabilisieren unterirdischer Formationen aus oxidischen anorganischen Materialien handelt, bei dem man die die härtbare Zusammensetzung in die unterirdische Formation injiziert und unter den in der Formation herrschenden Temperaturen aushärtet.

Zu der Erfindung ist im Einzelnen das Folgende auszuführen:

Zur Ausführung der Erfindung wird eine härtbare Zusammensetzung eingesetzt, welche mindestens ein verethertes Aminoplastharz, und zwar ein verethertes Harnstoff-Formaldehyd-Harz umfasst.

Aminoplastharze sind dem Fachmann prinzipiell bekannt. Es handelt sich hierbei um relativ niedermolekulare Polykondensationsprodukte aus NH-Gruppen aufweisenden Verbindungen mit Carbonylverbindungen. Beispiele geeigneter NH-Gruppen aufweisenden Verbindungen umfassen Harnstoff, Melamin, Urethane oder aromatische Amine. Bei den Carbonylverbindungen handelt es sich bevorzugt um Formaldehyd, es kann sich aber auch um höhere Aldehyde oder Ketone handeln.

Auch veretherte Aminoplastharze sind dem Fachmann prinzipiell bekannt. Sie werden erhalten, indem man die OH-Gruppen von Aminoplastharzen ganz oder teilweise mit Alkoholen verethert. Geeignete Alkohole sind insbesondere aliphatische C₁- bis C₁₀-Monoalkohole, bevorzugt aliphatische C₁- bis C₄-Monoalkohole sowie C₁- bis C₁₀-Dialkokole. Beispiele umfassen Methanol, Ethanol, Butanol, 1,2-Ethandiol oder 1,4-Butandiol. Bevorzugt können Urethangruppen aufweisende veretherte Aminoplastharze eingesetzt werden. Diese sind erhältlich, indem man zum Verethern zumindest teilweise C₁- bis C₁₀-Dialkokole einsetzt oder mit Monoalkoholen veretherte Verbindungen nachträglich mit Dialkoholen umethert. Veretherte Aminoplastharze sind kommerziell erhältlich.

Die veretherten Aminoplastharze können zum Einsatz auch noch mit weiteren Additiven modifiziert werden. Beispiele derartiger Additive umfassen 3-Aminopropyltrimethoxysilan, 3-Aminopropyltriethoxysilan, (3-Glycidoxypropyl)trimethoxysilan, Polytetrahydrofuran oder Phenol-Formaldehyd-Harze.

Aminoplastharze und veretherte Aminoplastharze können zur Anwendung zu Duroplasten ausgehärtet werden. In der Regel wird hierzu ein Härter, bevorzugt ein saurer Härter verwandt, ohne dass die Verwendung von Härtern in jedem Falle zwingend erforderlich ist. Geeignete Härter für Aminoplastharze sind dem Fachmann bekannt. Beispiele geeigneter Härter umfassen anorganische oder organische Säuren und/oder deren Salze. Beispiele derartiger Härter umfassen Ammoniumchlorid, Ammoniumnitrat oder Maleinsäure. Selbstverständlich können auch Gemische zweier oder mehrerer Härter eingesetzt werden.

Harnstoff-Formaldehyd-Harze werden durch Umsetzung von Harnstoff und Formaldehyd bei nachfolgender Veretherung erhalten. Veretherte Harnstoff-Formaldehyd-Harze sind kommerziell erhältlich.

Die erfindungsgemäß verwendeten veretherten Harnstoff-Formaldehyd-Harze erhalten Struktureinheiten der allgemeinen Formel (I) und/oder (II).

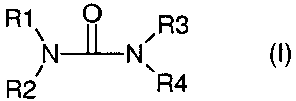

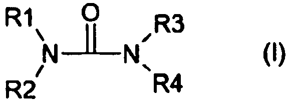

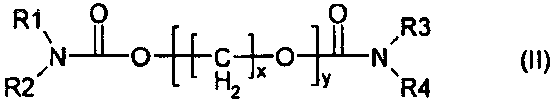

Hierbei stehen die Reste R1, R2, R3 und R4 für Substituenten ausgewählt aus der Gruppe von H, -CH₂-OH und -CH₂-OR, mit der Maßgabe, dass es sich bei mindestens einem der Reste R1, R2, R3 und R4 um einen Rest-CH₂-OR' handelt.

In obiger Formel steht R' für einen aliphatischen Kohlenwasserstoffrest mit 1 bis 10 Kohlenstoffatomen, insbesondere einen Rest mit 1 bis 4 Kohlenstoffatomen. Bevorzugt steht R' für einen Methyl-, Ethyl- oder n-Butylrest, besonders bevorzugt einen Methyl- oder n-Butylrest.

In der Formel (II) steht x für eine Zahl von 2 bis 8, bevorzugt 4 und y für eine Zahl von 1 bis 20, bevorzugt 1 bis 10.

Verbindungen der Formel (I) werden erhalten, indem man Harnstoff mit Formaldehyd sowie mindestens einem aliphatischen Monoalkohol mit 1 bis 10 Kohlenstoffatomen, bevorzugt 1 bis 4 Kohlenstoffatomen unter dem Fachmann bekannten Bedingungen umsetzt. Verbindungen der Formel (II) können vorteilhaft erhalten werden, indem man Verbindungen der Formel (I) zusätzlich mit einem Dialkohol der allgemeinen Formel (III) 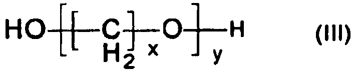 umsetzt. Eine derartige Reaktion ist auch als Carbamatisierung bekannt. Selbstverständlich kann der besagte Dialkohol auch bereits von Anfang an zur Veretherung eingesetzt werden. Bevorzugte Dialkohole umfassen 1,4-Butandiol sowie Polytetrahydrofuran mit einem mittleren Polymerisationsgrad von 1 bis 20, bevorzugt 1 bis 10.

Für den Fachmann auf dem Gebiet der Kondensationsrekationen ist klar, dass bei einer derartigen Umsetzung ein Gemisch verschiedener Verbindungen (I) bzw. (II) erhalten wird. Darüber hinaus kann ein solches Gemisch noch nicht umgesetzten Harnstoff enthalten. Das Gemisch kann in der Regel ohne weitere Aufreinigung eingesetzt werden, selbstverständlich ist es aber auch möglich, Verbindungen mit einer ganz bestimmten Formel (I) bzw. (II) gezielt zu isolieren.

nachfolgenden Tabelle sind typische molare Verhältnisse sowie bevorzugte molare Verhältnisse zusammengefasst:

| | | Harnstoff | | Formaldehyd | | Monoalkohol | | Dialkohol |
|---|---|---|---|---|---|---|---|---|
| | | | | | | | | |
| | minimal | 1 | : | 1 | : | 0,1 | : | optional 0,1 |
| | maximal | 1 | : | 4 | : | 4 | : | optional 0,7 |
| bevorzugt | minimal | 1 | : | 1,5 | : | 0,5 | : | 0,1 |
| | maximal | 1 | : | 3,0 | : | 1,9 | : | 0,5 |
| besonders bevorzugt | minimal | 1 | : | 1,7 | : | 0,5 | : | 0,35 |
| | maximal | 1 | : | 2,5 | : | 1,2 | : | 0,55 |

Zur Ausführung der Erfindung werden bevorzugt veretherte Harnstoff-Formaldehyd-Harze eingesetzt, welche Verbindungen der allgemeinen Formel (II) enthalten, d.h. solche, die unter Verwendung von Dialkoholen synthetisiert werden. Derartige veretherte Harnstoff-Formaldehyd-Harze enthalten dementsprechend Urethangruppen; sie werden dementsprechend auch als carbamatisierte Harze bezeichnet.

Selbstverständlich können auch Gemische zweier oder mehrerer verschiedener veretherter Harnstoff-Formaldehyd-Harze eingesetzt werden. Weiterhin können optional neben den veretherten Harnstoff-Formaldehyd-Harzen auch weitere härtbare Harze eingesetzt werden. In solchen Gemischen sollte die Menge veretherter Harnstoff-Formaldehyd-Harze aber 50 Gew. % bezüglich der Menge aller eingesetzten Harze betragen, bevorzugt mindestens 75 Gew. %, besonders bevorzugt mindestens 90 Gew. % und ganz besonders bevorzugt sollten als Harze ausschließlich veretherte Harnstoff-Formaldehyd-Harze eingesetzt werden. Bespiele weiterer härtbarer Harze umfassen Phenol-Formaldehyd-Harze, Melamin-Formaldehyd-Harze, veretherte Melamin-Formaldehyd-Harze oder Melamin-Harnstoff-Formaldehyd-Harze.

Die eingesetzten veretherten Harnstoff-Formaldehyd-Harze können erfindungsgemäß als solche, also ohne zusätzliche Lösemittel eingesetzt werden. Sie können zum Einsatz aber auch in geeigneten Lösemitteln gelöst bzw. dispergiert eingesetzt werden. Hinsichtlich der Lösemittel existieren keinerlei prinzipielle Beschränkungen, vorausgesetzt, die Harze sind darin in ausreichendem Maße löslich bzw. dispergierbar. Geeignete Lösemittel sind insbesondere Wasser sowie polare organische Lösemittel, insbesondere mit Wasser mischbare organische Lösemittel. Beispiele geeigneter Lösemittel umfassen Wasser, Methanol, Ethanol, n-Propanol, i-Propanol, n-Butanol und i-Butanol. Besonders bevorzugt als Lösemittel ist Wasser. Die Konzentration der Harze kann vom Fachmann je nach dem gewünschten Anwendungszweck bestimmt werden.

Die eingesetzten veretherten Harnstoff-Formaldehyd-Harze können darüber hinaus noch weitere Additive enthalten. Beispiele derartiger Additive umfassen Silane oder Siloxane, Diamine, Dicarbonsäure, Diole, Polyole oder Polyetherole. Beispiele derartiger Additive umfassen Butandiol, Diethethylenglykol, Triethylenglykol oder Polyethylenglykole, bevorzugt solche mit einem zahlenmitteleren Molekulargewicht Mₙ von nicht mehr als 1000 g/mol, Polytetrahydrofurane, bevorzugt solche mit einem zahlenmitteleren Molekulargewicht Mₙ von nicht mehr als 1000 g/mol, Glycerin, wie 3-Aminopropyltrimethoxysilan, 3-Aminopropyltriethoxysilan oder (3-Glycidoxypropyl)trimethoxysilan. Das Gewichtsverhältnis derartiger Additve zum eingesetzten Harz beträgt-sofern vorhanden- in der Regel 1 bis 20 Gew. % bezüglich der Menge aller Harze. Die Menge wird vom Fachmann je nach den gewünschten Eigenschaften bestimmt.

Zum Härten der veretherten Harnstoff-Formaldehyd-Harze können den härtbaren Zusammensetzungen prinzipiell die üblichen, dem Fachmann bekannten Härter eingesetzt werden, wenngleich die Verwendung separater Härter nicht in jedem Falle zwingend erforderlich ist. Insbesondere bei Temperaturen oberhalb von 100°C kann es möglich sein, auf den Zusatz eines separaten Härters zu verzichten, während bei Temperaturen unterhalb 100°C die Anwesenheit eines Härters im Regelfalle notwendig oder zumindest vorteilhaft ist. Beispiele geeigneter Härter umfassen insbesondere saure Härter wie anorganische oder organische Säuren und/oder deren Salze wie beispielsweise Maleinsäure bzw. Maleinsäureanhydrid, p-Toluolsulfonsäure, Methansulfonsäure, Ameisensäure, Phosphorsäure, Ammoniumchlorid, Ammoniumbromid, Ammoniumnitrat, Ammoniumphosphat oder Ammoniumsulfat. Es können selbstverständlich auch Gemische zweier oder mehrerer Härter eingesetzt werden. Es hat sich insbesondere bewährt, Gemische zweier verschiedener Härter einzusetzen, wenn bei tieferen Temperaturen, beispielsweise bei Temperaturen von 15 bis 40°C vernetzt werden soll. Art und Menge des Härters wird vom Fachmann je nach den gewünschten Eigenschaften der härtbaren Zusammensetzung gewählt. Mittels der Menge des Härters kann vom Fachmann beispielsweise die gewünschte Aushärtegeschwindigkeit bestimmt werden. Bewährt hat sich -sofern vorhanden- eine Menge von 0,1 bis 20 Gew. % bezüglich des Harzes, bevorzugt eine Menge von 0,1 bis 10 Gew. %.

Besonders vorteilhaft sind Härterkombinationen aus einer Säure, insbesondere Maleinsäure bzw. Maleinsäureanhydrid, p-Toluolsulfonsäure, Methansulfonsäure, Ameisensäure, Phosphorsäure sowie einem Ammoniumsalz, insbesondere Ammoniumchlorid, Ammoniumbromid, Ammoniumnitrat, Ammoniumphosphat oder Ammoniumsulfat. Die Härter können im Gewichtsverhältnis 1:9 bis 9:1, bevorzugt 1:4 bis 4:1 und besonders bevorzugt etwa zu gleichen Anteilen eingesetzt werden. Besonders vorteilhafte Kombinationen umfassen Maleinsäureanhydrid/Ammoniumnitrat, Maleinsäureanhydrid/Ammoniumsulfat, Maleinsäureanhydrid/Ammoniumphosphat, Maleinsäureanhydrid/Ammoniumbromid, Phosphorsäure /Ammoniumnitrat, Phosphorsäure/Ammoniumsulfat, Phosphorsäure/Ammoniumphosphat, Phosphorsäure/Ammoniumbromid, Methansulfonsäure/Ammoniumnitrat, Methansulfonsäure /Ammoniumsulfat, Methansulfonsäure /Ammoniumphosphat, Methansulfonsäure/Ammoniumbromid, Ameisensäure /Ammoniumnitrat, Ameisensäure/Ammoniumsulfat, Ameisensäure/Ammoniumphosphat sowie Ameisensäure /Ammoniumbromid.

Die beschriebenen härtbaren Zusammensetzungen aus Harzen, sowie optional Härtern und weiteren Komponenten werden erfindungsgemäß zum Binden von nicht-massiven, oxidischen anorganischen Materialien, bevorzugt zum Binden von oxidischen anorganischen Partikeln verwendet. Hierbei entstehen feste Zusammensetzungen, welche ein gehärtetes Harz sowie nicht-massive, oxidische anorganische Materialien, bevorzugt oxidische anorganische Partikel umfassen.

Der Begriff "oxidische anorganische Materialien" soll alle Arten von oxidischen anorganischen Materialien umfassen, wobei der Begriff auch Materialien mit Hydroxidgruppen mit umfassen soll. Die anorganischen Materialien können sowohl aus natürlichen Quellen stammen, oder es kann sich um synthetisch hergestellte Materialien handeln. Beispiele anorganischer oxidischer Materialien umfassen Siliciumdioxid und Silikate, beispielsweise silikatische Mineralien wie Quarz, Feldspäte, Alumosilikate, Tone oder Schichtsilikate. Weiterhin kann es sich beispielsweise um Aluminiumoxide bzw. - hydroxide wie beispielsweise Bauxit oder Aluminate handeln. Es kann sich selbstverständlich auch um Mischungen verschiedener Materialien handeln.

Unter dem Begriff "nicht massiv" sollen einerseits Materialien verstanden werden, die Partikel aus oxidischen anorganischen Materialien umfassen. Hierbei kann es sich beispielsweise um grobe Schüttgüter aus oxidischen anorganischen Materialien wie beispielsweise Sand, Kies oder Steine handeln oder auch um feine Pulver aus anorganischen oxidischen Materialien wie Pigmente.

Oxidische anorganische Partikel weisen in der Regel eine Korngröße von weniger als 20 mm, bevorzugt weniger als 5 mm auf, ohne dass die Erfindung auf diese Korngröße beschränkt sein soll. Die Angaben zur Korngröße beziehen sich auf die mittels einer Siebanalyse ermittelten Partikelgrößen. Es handelt sich also nicht notwendigerweise um die Primärpartikelgröße, sondern es kann sich bei den Partikeln auch um Agglomerate kleinerer Partikel handeln. Bevorzugt können Partikel mit einer Korngröße von 0,01 mm bis 2 mm, besonders bevorzugt 0,1 bis 1 mm eingesetzt werden. Für den Fachmann ist klar, dass es sich hierbei um Mittelwerte handelt. Mischungen verschiedener Partikel können selbstverständlich auch bimodale oder polymodale Partikelgrößenverteilungen aufweisen.

Bevorzugt können zur Ausführung der Erfindung Siliciumdioxidpartikel, insbesondere Sand eingesetzt werden, insbesondere solche mit einer Partikelgröße von ca. 0,1 mm bis 1,3 mm. Bevorzugte Siliciumdioxidpartikel weisen einen Reinheitsgrad von 80 bis 100 Gew. % auf, bezogen auf die Gesamtmenge von Siliciumdioxidpartikeln und Verunreinigungen. Bei Verunreinigungen neben den Siliciumdioxidpartikeln kann es sich beispielsweise um Feldspäte oder Tone handeln.

Unter dem Begriff "nicht massiv" sollen weiterhin auch solche oxidischen anorganischen Materialien verstanden werden, welche Poren, Risse, Brüche oder Spalten aufweisen. Beispiele derartiger Materialien umfassen Poren, Risse oder Spalten aufweisende Gesteinsschichten. Derartige Gesteinsschichten erscheinen zwar üblicherweise makroskopisch als massive Gebilde, wobei aber deren Stabilität durch Poren, Risse, Brüche oder Spalten teilweise erheblich beeinträchtigt sein kann.

Zur Ausführung der Erfindung wird die beschriebene härtbare Zusammensetzung aus Harzen sowie optional Härtern und weiteren Komponenten mit den nicht-massiven oxidischen anorganischen Materialien in Kontakt gebracht. Die Art des "in Kontakt bringen" richtet sich nach der Anordnung der oxidischen anorganischen Materialien, welche durch das Harz gebunden werden sollen.

Handelt es sich um eine lose Schüttung oxidischer anorganischer Partikel, können diese einfach mit der härtbaren Zusammensetzung - gegebenenfalls unter Verwendung geeigneter Mischaggregate- gemischt werden. Die erhaltenen Mischungen können danach zu der gewünschten Form ausgeformt und ausgehärtet werden.

Handelt es sich um nicht-massive oxidische anorganische Materialien oder oxidische anorganische Partikel, welche bereits immobil an einem bestimmten Ort angeordnet sind, wie beispielsweise Sandfugen, Sandwege, unterirdische Formationen aus Sand oder anderen oxidischen anorganischen Partikeln, durch die gebohrt werden soll oder lockeres Felsmaterial, durch welches gebohrt werden soll, dann ist die Verwendung von Mischaggregaten naturgemäß nicht möglich. In diesem Falle kann die härtbare Zusammensetzung auf das zu verfestigende Material aufgesprüht oder in das zu verfestigende Material gedrückt oder injiziert werden.

Die Menge der zum Binden zu verwendenden härtbaren Zusammensetzug wird vom Fachmann je nach den gewünschten Eigenschaften der festen Zusammensetzung aus gehärtetem Harz sowie oxidischen anorganischen Partikeln bestimmt. Sie richtet sich beispielsweise nach der gewünschten Festigkeit. Bewährt hat sich eine Menge von 0,5 bis 60 Gew. % Harz bezüglich der oxidischen anorganischen Partikel, insbesondere 1 bis 40 Gew. %, bevorzugt 2 bis 25 Gew. % und besonders bevorzugt 3 bis 15 Gew. %.

Zum Binden der nicht-massiven, oxidischen anorganischen Materialien wird das härtbare Harz anschließend bei Temperaturen von größer 0°C bis 280°C, bevorzugt 5 bis 200°C und besonders bevorzugt 10 bis 180°C ausgehärtet. Auch das Aushärten richtet sich nach der Anordnung der oxidischen anorganischen Partikel, welche gebunden werden sollen. Mobile Formkörper können zum Aushärten beispielsweise in einem geeigneten Ofen erwärmt werden. Die Aushärtetemperatur kann hierbei an die Natur des Härters angepasst werden. Bei immobil an einem bestimmten Ort angeordneten nicht massiven, oxidischen anorganischen Materialien ergibt sich die Härtungstemperatur in der Regel automatisch durch die vor Ort herrschende Temperatur, beispielsweise die Temperatur der unterirdischen Sandformation. Soweit technisch möglich kann der Fachmann aber auch in derartige immobile Formationen Wärme zum Aushärten einbringen.

Das erfindungsgemäße Verfahren kann zum Binden unterschiedlichster Arten und Anordnungen von nicht-massiver, oxidischer anorganischer Partikel verwendet werden.

Beispielsweise können Formkörper aus oxidischen anorganischen Partikeln, bevorzugt Siliciumdioxid bzw. Sand hergestellt werden. Weiterhin können beispielsweise Sandfugen, Baugruben oder Wege mittels des erfindungsgemäßen Verfahrens verfestigt werden und das Verfahren kann zur Felsverfestigung und im Tunnelbau eingesetzt werden.

Besonders vorteilhaft kann das Verfahren in der Erdöl- und Erdgasförderung eingesetzt werden. Beispiele umfassen das Binden von Sandformationen, durch welche gebohrt wird. Hierzu wird die beschriebene härtbare Zusammensetzung in die unkonsolidierte, unterirdische Sandschicht verpumpt und dort ausgehärtet.

Hierbei kann man beispielsweise so vorgehen, dass man -nachdem durch die Sandschicht gebohrt oder aber das Bohrloch bereits fertig gestellt wurde- die härtbare Zusammensetzung mithilfe von Pumpen in die zu behandelnde Formation presst. Hierzu wird je nach der Art der verwendeten Harze- in aller Regel ein härtbare Zusammensetzung eingesetzt, welche zusätzlich mindestens ein Lösemittel, bevorzugt Wasser enthält. Die Konzentration des Harzes in der härtbaren Zusammensetzung sollte hierbei so eingestellt werden, dass der durch die Pumpen erzeugte hydraulische Druck ausreicht, um die Harzmischung in die zu konsolidierende Formation zu verpressen und die härtbare Zusammensetzung ausreichend weit in die Formation eindringen kann. Für diese Anwendung hat es sich daher bewährt, härtbare Zusammensetzungen einzusetzen, deren Viskosität 30 mPas, bevorzugt 10 mPas nicht übersteigt, jeweils gemessen bei 25°C aufweisen. Die Konzentration der Harze in derartigen härtbaren Zusammensetzungen beträgt in der Regel 5 bis 50 Gew. % bzgl. der Summe aller Komponenten der härtbaren Zusammensetzung.

Sofern die eingesetzte härtbare Zusammensetzung einen Härter enthält, wird der Härter der Zusammensetzung vor dem Einbringen der Formulierung in die Formation mit dem Harz vermischt. Art und Menge des Härters sollten hierbei so gewählt werden, dass die Vernetzung erst nach der Platzierung der härtbaren Zusammensetzung in der Formation erfolgt. Dies ist in der Regel je nach Art der Formation- 1 bis 6 h nach Anmischen der härtbaren Zusammensetzung der Fall.

Der Verlust von Stützmaterialien nach dem Stimulieren kann verhindert werden, indem die beschriebene Zusammensetzung nach der Platzierung des Stützmaterials in den Riss verpumpt und dort aushärtet wird. Das Harz härtet ebenfalls in den Rissen aus und verhindert so, dass das Stützmaterial während der Produktion des Kohlenwasserstoffs aus dem Riss herausgedrückt wird.

Weitere Anwendungen umfassen Anwendungen im Bergbau, um die Loslösung von Lockergestein im Vortrieb zu vermeiden oder aber das Gestein vor Verwitterung bzw. Oxidation zu schützen.

Das Verfahren kann weiterhin zur Verhinderung der Entwicklung von Staub oder zum Stabilisieren von Böden verwendet werden, beispielsweise im Bergbau oder aber auch bei der Verfestigung von nichtasphaltierten Straßen.

Die verwendeten veretherten Harnstoff-Formaldehyd-Harze weisen eine Reihe von Vorteilen gegenüber nicht veretherten Systemen auf. Sie haben beispielsweise eine deutlich verbesserte Beständigkeit gegenüber Wasser, Sole und organischen Lösemitteln auf und können dementsprechend besonders gut für Aufgaben in der Erdöl- und Ergasförderung eingesetzt werden, wo sie sowohl mit (salzhaltigem) Wasser wie mit Kohlenwasserstoffen in Berührung kommen.

Mit kurzkettigen Alkoholen, insbesondere mit Methanol veretherte Harnstoff-Formaldehyd-Harze weisen eine ausreichende Wasserlöslichkeit auf, um in technisch sinnvollen Konzentrationen eingesetzt werden zu können. Bei derartigen Hartzusammensetzungen kann zur Anwendung auf den Zusatz organischer Lösemittel verzichtet werden und es kann mit wässrigen Zusammensetzungen gearbeitet werden.

Zudem wurde gefunden, dass die Abbindezeit der eingesetzten, härtbaren Zusammensetzungen mit säurebasierten Härtersystemen genau eingestellt werden kann, was für Untertageanwendungen in der Regel erforderlich ist.

Die folgenden Beispiele sollen die Erfindung näher erläutern:

### 1. Versuchsreihe (Vergleichsbeispiele)

Für eine erste Versuchsreihe wurden handelsübliche veretherte Aminoplastharze eingesetzt:

| | |
|---|---|
| Harz 1 | Handelsübliches, mit Methanol hoch verethertes Melamin-Formaldehyd-Harz, gelöst in einer Methanol-Wasser-Mischung, Feststoffanteil ca. 81 bis 85 Gew. % |
| Harz 2 | Handelsübliches, mit Methanol verethertes Harnstoff-Formaldehyd-Harz, carbamatisiert (d.h. Produkt enthält Struktureinheiten der Formel (II)), lösemittelfrei |
| Harz 3 | Handelsübliches, mit Methanol verethertes Harnstoff-Formaldehyd-Harz, carbamatisiert, gelöst in Wasser, Feststoffgehalt ca. 75 bis 79 Gew. % |
| Harz 4 | Handelsübliches, mit Methanol verethertes Harnstoff-Formaldehyd-Harz, nicht carbamatisiert, gelöst in Wasser, Feststoffgehalt ca. 75 bis 79 Gew. % |

### Modifizierte Harze:

Weiterhin wurden mit Additiven modifizierte Harze hergestellt. Hierzu wurde jeweils eines der Harzen 1 bis 4 mit den gewünschten Additiven gemischt und bei einer Temperatur von 80°C und einem pH-Wert von 7 bis 8 für 2 h erhitzt. Die verwendeten Additive sowie die verwendeten Mengen (Gewichtsverhältnisse) sind jeweils in Tabelle 1 angegeben.

### Herstellung gehärteter Sandzusammensetzungen (Allgemeine Vorschrift):

Jeweils 8 g des ausgewählten Harzes sowie 0,24 g des ausgewählten Härters wurden miteinander gemischt. Dann wurde Sand (Partikelgröße ca. 0,3 bis 0,8 mm) hinzugefügt und untergemischt. Die Mischung wurde in eine Form gepresst und über Nacht bei 57°C ausgehärtet. Danach wurde die gehärtete Zusammensetzung für weitere Tests der Form entnommen. Der erhaltene Formkörper hatte die Dimensionen 8 cm x 1 cm x 0,5 cm. Die jeweils verwendeten Harze und Härter sind in Tabelle 1 zusammengestellt.

### Anwendungstechnische Tests

Mit den Proben wurden die folgenden Tests durchgeführt:

### Aussehen und Festigkeit

Es wurde jeweils das Aussehen und die Festigkeit der Formkörper qualitativ beurteilt.

### Wasserbeständigkeit

### Phase 1:

Zur Ermittlung der Wasserbeständigkeit wurden die Proben für 2 h in Wasser bei einer Temperatur von 80°C gelagert und anschließen getrocknet. Nach der Lagerung in Wasser wurde wiederum das Aussehen und die Festigkeit der Formkörper qualitativ beurteilt. Wichtig ist insbesondere, ob der Formkörper den Test überstand oder zerfiel.

Danach wurden die Proben (sofern noch möglich) nochmals in Wasser bei Raumtemperatur für 20 Tage gelagert (Phase 2).

Anschließend wurden die Proben für 2 Monate in Wasser bei 80°C gelagert und die Zeit bis zur Beschädigung der Proben notiert (Phase 3).

Die Ergebnisse sind jeweils in Tabelle 1 aufgeführt.

### Flexibilität:

Von den Proben wurden außerdem mechanische Eigenschaften gemessen, und zwar die Biegefestigkeit (flexural strenght) und die Bruchspannung (breaking stress). Die Messungen wurden gemäß ISO 178 an Proben 80 mm x 10 mm x 5 mm durchgeführt. Bei der Messung beträgt der Abstand zwischen den beiden Auflagepunkte 64 mm, die Biegegeschwindingkeit 2 mm/min, und gemessen wurde bei Raumtemperatur.

Die gemessenen Proben sowie die erhaltenen Ergebnisse sind in Tabelle 2 zusammengefasst.

**Tabelle 1: Zusammensetzung der hergestellten, gehärteten Sandzusammensetzungen sowie Wasserbeständigkeitstests**

| Beispiel Nr. | Harz | Härter | Aussehen nach Herausnehmen aus der Form | Wasserbeständigkeitstest | | |
|---|---|---|---|---|---|---|
| | | | | Phase 1 | Phase 2 | Phase 3 |
| I-1 | Harz 1 | NH₄Cl | o.k. | - | - | - |
| I-2 | Harz 1 | NH₄NO₃ | o.k. | - | - | - |
| I-3 | Harz 1 | Maleinsäure | o.k. | o.k. | o.k. | 1 Tag |
| I-4 | Harz 2 | NH₄Cl | o.k. | o.k. | o.k. | > 2 Mon. |
| I-5 | Harz 2 | NH₄NO₃ | o.k. | o.k. | o.k. | > 2 Mon. |
| I-6 | Harz 2 | Maleinsäure | o.k. | - | - | - |
| I-7 | Harz 2 + 3-Aminopropyltriethoxysilan (1:0,11) | NH₄Cl | o.k. | o.k. | o.k. | > 2 Mon. |
| I-8 | Harz 2 + 3-Aminopropyltrimethoxysilan (1:0,05) | NH₄Cl | o.k. | o.k. | o.k. | > 2 Mon. |
| I-9 | Harz 2 + 3-Aminopropyltrimethoxysilan (1:0,05) | NH₄NO₃ | o.k. | o.k. | o.k. | > 2 Mon. |
| I-10 | Harz 3 + 3-Aminopropyltrimethoxysilan (1:0,05) | NH₄Cl | o.k. | o.k. | o.k. | > 2 Mon. |
| I-11 | Harz 3 + 3-Aminopropyltrimethoxysilan (1:0,05) | NH₄NO₃ | o.k. | o.k. | o.k. | > 2 Mon. |
| I-12 | Harz 3 + 3-Aminopropyltriethoxysilan (1:0,13) | NH₄Cl | o.k. | o.k. | o.k. | 1 Tag |
| I-13 | Harz 4 + Ethylenglykol (1:0,6) | Maleinsäure | o.k. | o.k. | o.k. | 1 Tag |
| I-14 | Harz 4 + 3-Aminopropyltriethoxysilan (1:0,6) | Maleinsäure | o.k. | o.k. | o.k. | 1 Tag |
| I-15 | Harz 2 +Phenol-Formaldehyd-Harz (1:0,1) | NH₄Cl | o.k. | o.k. | o.k. | > 2 Mon. |
| I-16 | Harz 2 +Phenol-Formaldehyd-Harz (1:0,1) | NH₄NO₃ | o.k. | o.k | o.k | > 2 Mon. |
| I-17 | Harz 2 +Phenol-Formaldehyd-Harz (1:0,1) | Maleinsäure | weich, aber noch o.k. | - | - | - |
| I-18 | Harz 2 + Poly-THF (1:0,1) | NH₄CI | o.k. | o.k. | o.k. | > 2 Mon. |
| I-19 | Harz 2 + Poly-THF (1:0,08) | NH₄NO₃ | o.k. | o.k. | o.k. | > 2 Mon. |
| I-20 | Harz 2 + 3-Aminopropyltriethoxysilan + Poly-THF (1:0,1:0,1) | NH₄Cl | o.k. | o.k. | o.k. | > 2 Mon. |
| I-21 | Harz 2 + 3-Aminopropyltriethoxysilan + Poly-THF (1:0,1:0,1) | NH₄NO₃ | o.k. | o.k. | o.k. | > 2 Mon. |

**Tabelle 2: Ergebnisse der mechanischen Tests**

| Beispiel Nr. | Harz | Härter | Biegefestigkeit σₘ [MPa] | Bruchspannung σᵣ[MPa] |
|---|---|---|---|---|
| II-1 | Harz 1 | Maleinsäure | 3,1 | 3,09 |
| II-2 | Harz 2 | NH₄Cl | 3,72 | 1,86 |
| II-3 | Harz 2 | NH₄NO₃ | 3,43 | 1,71 |
| II-4 | Harz 2 | Maleinsäure | 1,02 | 0 |
| II-5 | Harz 3 | NH₄Cl | 4,19 | 2,09 |
| II-6 | Harz 3 | NH₄NO₃ | 4,72 | 2,35 |
| II-7 | Harz 3 | Maleinsäure | 1,43 | 0 |
| II-8 | Harz 2 +Phenol-Formaldehyd-Harz (1:0,1) | NH₄Cl | 5,48 | 2,74 |
| II-9 | Harz 2 +Phenol-Formaldehyd-Harz (1:0,1) | Maleinsäure | 1,18 | 0 |
| II-10 | Harz 2 + Poly-THF (1:0,1) | NH₄Cl | 3,93 | 3,08 |
| II-11 | Harz 2 + Poly-THF (1:0,08) | NH₄NO₃ | 3,14 | 1,57 |
| II-12 | Harz 2 + Poly-THF (1:0,08) | Maleinsäure | 0,53 | 0 |
| II-13 | Harz 2 + 3-Aminopropyltrimethoxysilan (1:0,05) | NH₄Cl | 3,21 | 1,6 |
| II-14 | Harz 2 + 3-Aminopropyltrimethoxysilan (1:0,05) | NH₄NO₃ | 4,17 | 2,08 |
| II-15 | Harz 2 + 3-Aminopropyltrimethoxysilan (1:0,05) | Maleinsäure | 0,64 | 0 |
| II-16 | Harz 2 + 3-Aminopropyltriethoxysilan (1:0,11) | NH₄Cl | 3,75 | 1,88 |
| II-17 | Harz 2 + 3-Aminopropyltrimethoxysilan (1:0,11) | Maleinsäure | 1,5 | 0 |
| II-18 | Harz 2 + 3-Aminopropyltrimethoxysilan + Phenol-Formaldehyd-Harz | NH₄Cl | 3,65 | 1,83 |
| II-19 | Harz 2 + 3-Aminopropyltrimethoxysilan + Phenol-Formaldehyd-Harz | NH₄NO₃ | 3,19 | 1,59 |
| II-20 | Harz 2 + 3-Aminopropyltrimethoxysilan + Phenol-Formaldehyd-Harz | Maleinsäure | 3,54 | 1,77 |
| II-21 | Harz 2 + 3-Aminopropyltriethoxysilan + Poly-THF (1:0,1:0,1) | NH₄Cl | 0,42 | 0 |
| II-22 | Harz 2 + 3-Aminopropyltriethoxysilan + Poly-THF (1:0,1:0,1) | NH₄NO₃ | 1,14 | 0 |
| II-23 | Harz 2 + 3-Aminopropyltriethoxysilan + Poly-THF (1:0,1:0,1) | Maleinsäure | 0,67 | 0 |
| II-24 | Harz 2 + Ethylenglykol | NH₄NO₃ | 0,14 | 0 |
| II-25 | Harz 2 + Ethylenglykol | Maleinsäure | 0,74 | 0 |
| II-26 | Harz 3 + 3-Aminopropyltriethoxysilan (1:0,13) | NH₄Cl | zu weich | zu weich |
| II-27 | Harz 3 + 3-Aminopropyltriethoxysilan (1:0,13) | Maleinsäure | 1,16 | 0 |
| II-28 | Harz 4 | NH₄Cl | vor dem Test gebrochen | |
| II-29 | Harz 4 | Maleinsäure | 2,27 | 0 |
| II-30 | Harz 4 + 3-Aminopropyltrimethoxysilan | NH₄Cl | 0,91 | 0 |
| II-31 | Harz 4 + 3-Aminopropyltrimethoxysilan | Maleinsäure | 3,12 | 1,55 |
| II-32 | Harz 4 + 3-Aminopropyltriethoxysilan | NH₄NO₃ | 0,46 | 0 |
| II-33 | Harz 4 + 3-Aminopropyltriethoxysilan | Maleinsäure | 2,43 | 1,21 |
| II-34 | Harz 4 + Ethylenglykol | NH₄Cl | 2,63 | 1,32 |
| II-35 | Harz 4 + Ethylenglykol | Maleinsäure | 3,43 | 1,71 |

### 2. Versuchsreihe (erfindungsgemäße Beispiele)

Für die Versuche wurden die nachfolgenden Harnstoff-Formaldehyd-Harze synthetisiert:

| | |
|---|---|
| Harz 5 | Mit n-Butanol verethertes Harnstoff-Formaldehyd-Harz aus Harnstoff (1 mol), Formaldehyd (1,8 mol), n-Butanol (0,6 mol) und 1,4-Butandiol (0,5 mol), Lösung in n-Butanol (ca. 60 Gew. % Harz) |
| Harz 6 | Mit Methanol verethertes Harnstoff-Formaldehyd-Harz aus Harnstoff (1 mol), Formaldehyd (2,3 mol), Methanol (0,6 mol) und 1,4-Butandiol (0,5 mol), lösemittelfrei |
| Harz 7 | Mit Methanol verethertes Harnstoff-Formaldehyd-Harz aus Harnstoff (1 mol), Formaldehyd (2,2 mol), Methanol (1,0 mol) und 1,4-Butandiol (0,5 mol), Lösung in Wasser (ca. 75 Gew. % Harz) |
| Harz 8 | Mit n-Butanol verethertes Harnstoff-Formaldehyd-Harz aus Harnstoff (1 mol), Formaldehyd (2,3 mol), n-Butanol (1,3 mol), Lösung in n-Butanol (ca. 85 Gew. % Harz) |

### Herstellung der verwendeten Probekörper:

Zur Herstellung der Probekörper wurden jeweils 5 g des ausgewählten Harzes mit 1 g einer wässrigen Lösung des Härters (35 Gew. % Härter in Wasser) bei Raumtemperatur gemischt. Sofern 2 Härter eingesetzt wurden, wurden diese im Verhältnis 1:1 eingesetzt. Dann wurde Sand (Partikelgröße ca. 0,3 bis 0,8 mm) hinzugefügt und untergemischt. Aus der Mischung wurden unter Verwendung einer Silikonform stäbchenförmige Probenkörper Länge 8 cm, Breite 1 cm, Dicke 0,4 cm hergestellt und diese 1 h bei 140°C ausgehärtet. Nach dem Aushärten wurden die Probenkörper der Form entnommen. Die hergestellten Proben sind in Tabelle 3 zusammengestellt.

In einer weiteren Versuchsreihe wurde die Aushärtung der Proben bei Raumtemperatur vorgenommen.

### Herstellung von Probekörpern mit modifizierten Harzen:

Jeweils 10 g der Harze 5, 6 oder 7 werden mit 2 g einer wässrigen Lösung des Härters (Maleinsäureanhydrid 1 Ammoniumnitrat im Verhältnis 1:1, 35 Gew. % in Wasser) und 1 g eines ausgewählten Additives vermischt. Im Anschluss werden 100 g Sand (Partikelgröße ca. 0,3 bis 0,8 mm) zugegeben und durchmischt. Werden Silane als Additive verwendet, dann werden diese nicht zum Harz gegeben, sondern direkt mit dem Sand vermischt und anschließend 10 min antrocknen gelassen. Es werden Prüfkörper (Stäbchen) hergestellt, die 1h bei 140°C ausgehärtet werden.

### Konzentrationsreihe

Harz 7 wurde in der jeweils gewünschten Menge mit jeweils 20 Gew. % einer Lösung des Härters (35 Gew. % p-Toluolsulfonsäure) vermischt. Im Anschluss daran wurden jeweils 50 g Sand zugegeben, Prüfkörper (Stäbchen) hergestellt und 1 h bei 140°C ausgehärtet.
Variiert wurde das Verhältnis Sand / Harz. Die hergestellten Proben sind in Tabelle 11 zusammengefasst.

### Anwendungstechnische Tests:

### Ölbeständigkeit

Jeweils ½ Probekörper (d.h. Länge 4 cm, Breite 1 cm, Dicke 0,4 cm) wurde bei Raumtemperatur in Erdöl gelagert. Täglich wurde durch leichtes Umrühren mit einem Siedestab getestet, ob der Probekörper noch stabil war oder in einzelne Teile oder vollständig zerfiel. Die Ergebnisse sind in Tabelle 3 zusammengestellt.

### Wasserbeständigkeit

Jeweils ½ Probekörper (d.h. Länge 4 cm, Breite 1 cm, Dicke 0,4 cm) wurde bei Raumtemperatur in 100 ml Wasser gelagert. Täglich wurde durch leichtes Umrühren mit einem Siedestab getestet, ob der Probekörper noch stabil war oder in einzelne Teile oder vollständig zerfiel. Die Ergebnisse sind in Tabelle 4 zusammengestellt.

### Solebeständigkeit

Der Test wurde wie der Wasserbeständigkeitstest durchgeführt, nur wurde eine Salzlösung als Testmedium verwendet (89,4g NaCl, 52,94g CaCl·2H₂O, 15,06g MgCl₂·6H₂O gelöst in 1 I dest. H₂O). Die Ergebnisse der bei 140°C gehärteten Proben sind in Tabelle 5 dargestellt, zusammengestellt, die der bei RT gehärteten Proben in Tabelle 7.

### Biegefestigkeit

Von den Proben wurde weiterhin die Biegefestigkeit gemäß DIN EN ISO 178 wie oben beschrieben bestimmt. Die Ergebnisse der bei 140°C gehärteten Proben sind in Tabelle 6 zusammengestellt, die der bei RT gehärteten Proben in Tabelle 8, eine Konzentrationsreihe in Tabelle 11.

### Zersetzungstemperatur:

Die Zersetzungstemperatur einzelner Proben wurde mittels DSC bestimmt. Die Ergebnisse sind in Tabelle 9 zusammengestellt.

Die anwendungstechnischen Versuche mit den modifizierten Harzen sind in Tabelle 10 zusammengestellt.

**Tabelle 3: Härtung bei 140°C, Ölbeständigkeit, Härter im Verhältnis 1:1**

| **Härter** | **Harz 5** | **Harz 6** | **Harz 7** | **Harz 8** |
|---|---|---|---|---|
| | butanolverethert, mit Diol | methanolverethert, mit Diol | methanolverethert Wässrige Lösung | butanolverethert, ohne Diol |
| Maleinsäureanhydrid / Ammoniumnitrat | > 3 Mon. | > 3 Mon. | > 3 Mon. | * |
| Maleinsäureanhydrid / Ammoniumsulfat | > 3 Mon. | > 3 Mon. | > 3 Mon. | 1 - 4 Tage |
| Maleinsäureanhydrid / Ammoniumphosphat | > 3 Mon. | > 3 Mon. | > 3 Mon. | 1 - 4 Tage |
| Maleinsäureanhydrid / Ammoniumbromid | 11 bis 12 Tage | > 3 Mon. | > 3 Mon. | * |
| p-Toluolsulfonsäure | > 3 Mon. | > 3 Mon. | > 3 Mon. | * |
| Methansulfonsäure / Ammoniumnitrat | < 1 Tag | > 3 Mon. | > 3 Mon. | * |
| Methansulfonsäure / Ammoniumsulfat | < 1 Tag | > 3 Mon. | > 3 Mon. | * |
| Methansulfonsäure / Ammoniumphosphat | < 1 Tag | > 3 Mon. | > 3 Mon. | * |
| Methansulfonsäure / Ammoniumbromid | < 1 Tag | 5 bis 6 Tage | > 3 Mon. | 1 - 4 Tage |
| Ameisensäure / Ammoniumnitrat | > 3 Mon. | > 3 Mon. | > 3 Mon. | * |
| Ameisensäure / Ammoniumsulfat | > 3 Mon. | > 3 Mon. | > 3 Mon. | < 1 Tag |
| Ameisensäure / Ammoniumphosphat | > 3 Mon. | > 3 Mon. | > 3 Mon. | > 3 Mon. |
| Ameisensäure / Ammoniumbromid | > 3 Mon. | > 3 Mon. | > 3 Mon. | * |
| Phosphorsäure / Ammoniumnitrat | > 3 Mon. | > 3 Mon. | > 3 Mon. | * |

| | | | | |
|---|---|---|---|---|
| *: Probe bereits bei Herausnehmen aus der Silikonform zerbrochen, kein Beständigkeitstest in Öl möglich | | | | |

**Tabelle 4: Härtung bei 140°C, Wasserbeständigkeit, Härter im Verhältnis 1:1**

| **Härter** | **Harz 5** | **Harz 6** | **Harz 7** | **Harz 8** |
|---|---|---|---|---|
| | butanolverethert, mit Diol | methanolverethert, mit Diol | methanolverethert Wässrige Lösung | butanolverethert, ohne Diol |
| Maleinsäureanhydrid / Ammoniumnitrat | > 3 Mon. | > 3 Mon. | > 3 Mon. | * |
| Maleinsäureanhydrid / Ammoniumsulfat | > 3 Mon. | > 3 Mon. | > 3 Mon. | 2 - 3 Tage |
| Maleinsäureanhydrid / Ammoniumphosphat | > 3 Mon. | 8 - 9 Tage | 8-9Tage | 3 - 6 Tage |
| Maleinsäureanhydrid / Ammoniumbromid | > 3 Mon. | > 3 Mon. | > 3 Mon. | * |
| p-Toluolsulfonsäure | > 3 Mon. | > 3 Mon. | > 3 Mon. | * |
| Methansulfonsäure / Ammoniumnitrat | > 3 Mon. | > 3 Mon. | > 3 Mon. | * |
| Methansulfonsäure / Ammoniumsulfat | > 3 Mon. | > 3 Mon. | 10 - 13 Tage | * |
| Methansulfonsäure / Ammoniumphosphat | 10 - 13 Tage | 8 - 9 Tage | 8 - 9 Tage | * |
| Methansulfonsäure / Ammoniumbromid | > 3 Mon. | 8 - 9 Tage | 10 - 13 Tage | 2 - 3 Tage |
| Ameisensäure / Ammoniumnitrat | > 3 Mon. | > 3 Mon. | > 3 Mon. | * |
| Ameisensäure / Ammoniumsulfat | > 3 Mon. | > 3 Mon. | 10 bis 13 Tage | 3 - 6 Tage |
| Ameisensäure / Ammoniumphosphat | > 3 Mon. | 8 - 9 Tage | > 3 Mon. | > 3 Mon. |
| Ameisensäure / Ammoniumbromid | > 3 Mon. | > 3 Mon. | > 3 Mon. | * |
| Phosphorsäure / Ammoniumnitrat | > 3 Mon. | > 3 Mon. | > 3 Mon. | * |

| | | | | |
|---|---|---|---|---|
| *: Probe bereits bei Herausnehmen aus der Silikonform zerbrochen, kein Beständigkeitstest in Wasser möglich | | | | |

**Tabelle 5: Härtung bei 140°C, Solebeständigkeit, Härter im Verhältnis 1:1**

| **Härter** | **Harz 5** | **Harz 6** | **Harz 7** | **Harz 8** |
|---|---|---|---|---|
| | butanolverethert, mit Diol | methanolverethert, mit Diol | methanolverethert Wässrige Lösung | Butanolverethert ohne Diol |
| Maleinsäureanhydrid / Ammoniumnitrat | > 3 Mon. | > 3 Mon. | > 3 Mon. | * |
| Maleinsäureanhydrid / Ammoniumsulfat | > 3 Mon. | 8-11 Tage | > 3 Mon. | < 1 Tag |
| Maleinsäureanhydrid / Ammoniumphosphat | > 3 Mon. | > 3 Mon. | 5-6 Tage | 1-4 Tage |
| Maleinsäureanhydrid / Ammoniumbromid | > 3 Mon. | > 3 Mon. | > 3 Mon. | * |
| p-Toluolsulfonsäure | > 3 Mon. | > 3 Mon. | > 3 Mon. | * |
| Methansulfonsäure / Ammoniumnitrat | > 3 Mon. | > 3 Mon. | > 3 Mon. | * |
| Methansulfonsäure / Ammoniumsulfat | > 3 Mon. | 8 - 11 Tage | > 3 Mon. | * |
| Methansulfonsäure I Ammoniumphosphat | 8-11 | 6 - 7 Tage | 6-7 Tage | * |
| Methansulfonsäure / Ammoniumbromid | 8-11 | > 3 Mon. | > 3 Mon. | <1 Tag |
| Ameisensäure / Ammoniumnitrat | > 3 Mon. | > 3 Mon. | > 3 Mon. | * |
| Ameisensäure / Ammoniumsulfat | > 3 Mon. | > 3 Mon. | 11-12 Tage | 1-4 Tage |
| Ameisensäure / Ammoniumphosphat | > 3 Mon. | > 3 Mon. | 4 - 5 Tage | < 1 Tag |
| Ameisensäure / Ammoniumbromid | > 3 Mon. | > 3 Mon. | > 3 Mon. | * |
| Phosphorsäure / Ammoniumnitrat | > 3 Mon. | > 3 Mon. | > 3 Mon. | * |

| | | | | |
|---|---|---|---|---|
| *: Probe bereits bei Herausnehmen aus der Silikonform zerbrochen, kein Beständigkeitstest in Sole möglich | | | | |

**Tabelle 6: Härtung bei 140°C, Biegefestigkeit σₘ [MPa], Härter im Verhältnis 1:1**

| **Härter** | **Harz 5** | **Harz 6** | **Harz 7** | **Harz 8** |
|---|---|---|---|---|
| | butanolverethert, mit Diol | methanolverethert, mit Diol | methanolverethert Wässrige Lösung | Butanolverethert ohne Diol |
| Maleinsäureanhydrid / Ammoniumnitrat | 1,80 | **9,05** | **9,62** | * |
| Maleinsäureanhydrid / Ammoniumsulfat | 4,74 | 6,19 | **7,37** | 1,38 |
| Maleinsäureanhydrid / Ammoniumphosphat | 5,61 | **7,53** | 5,92 | 4,15 |
| Maleinsäureanhydrid / Ammoniumbromid | 2,87 | **9,36** | 5,97 | * |
| p-Toluolsulfonsäure | 6,56 | **8,18** | **9,96** | * |
| Methansulfonsäure / Ammoniumnitrat | 0,89 | 6,80 | 6,46 | * |
| Methansulfonsäure / Ammoniumsulfat | 0,34 | 4,68 | 3,98 | * |
| Methansulfonsäure / Ammoniumphosphat | 0,70 | 3,58 | 6,36 | * |
| Methansulfonsäure / Ammoniumbromid | 0,19 | 4,39 | 3,76 | 0,56 |
| Ameisensäure / Ammoniumnitrat | 3,32 | **9,04** | **7,60** | * |
| Ameisensäure / Ammoniumsulfat | 5,25 | 6,79 | **7,32** | 1,77 |
| Ameisensäure / Ammoniumphosphat | 3,92 | 5,07 | 3,66 | 2,81 |
| Ameisensäure / Ammoniumbromid | 4,10 | **7,13** | **9,50** | * |
| Phosphorsäure / Ammoniumnitrat | 1,59 | **7,54** | 6,71 | * |

| | | | | |
|---|---|---|---|---|
| *: Probe bereits bei Herausnehmen aus der Silikonform zerbrochen, kein Test möglich, Werte über 7 MPa sind fett gekennzeichnet | | | | |

**Tabelle 7: Härtung bei Raumtermperatur, Solebeständigkeit, Härter im Verhältnis 1:1**

| **Härter** | **Harz 5** | **Harz 6** | **Harz 7** | **Harz 8** |
|---|---|---|---|---|
| | butanolverethert, mit Diol | methanolverethert, mit Diol | methanolverethert Wässrige Lösung | Butanolverethert ohne Diol |
| Maleinsäureanhydrid / Ammoniumnitrat | > 3 Mon. | > 3 Mon. | > 3 Mon. | 9 - 10 Tage |
| Maleinsäureanhydrid / Ammoniumsulfat | > 3 Mon. | > 3 Mon. | > 3 Mon. | > 3 Mon. |
| Maleinsäureanhydrid / Ammoniumphosphat | > 3 Mon. | > 3 Mon. | 5 - 6 | > 3 Mon. |
| Maleinsäureanhydrid / Ammoniumbromid | > 3 Mon. | > 3 Mon. | > 3 Mon. | 9 - 10 Tage |
| p-Toluolsulfonsäure | > 3 Mon. | > 3 Mon. | > 3 Mon. | > 3 Mon. |
| Methansulfonsäure / Ammoniumnitrat | > 3 Mon. | > 3 Mon. | > 3 Mon. | 7 - 8 Tage |
| Methansulfonsäure / Ammoniumsulfat | > 3 Mon. | > 3 Mon. | > 3 Mon. | > 3 Mon. |
| Methansulfonsäure / Ammoniumphosphat | > 3 Mon. | > 3 Mon. | > 3 Mon. | > 3 Mon. |
| Methansulfonsäure / Ammoniumbromid | > 3 Mon. | > 3 Mon. | > 3 Mon. | > 3 Mon. |
| Ameisensäure / Ammoniumnitrat | > 3 Mon. | > 3 Mon. | > 3 Mon. | > 3 Mon. |
| Ameisensäure / Ammoniumsulfat | * | > 3 Mon. | > 3 Mon. | > 3 Mon. |
| Ameisensäure / Ammoniumphosphat | * | * | * | * |
| Ameisensäure / Ammoniumbromid | > 3 Mon. | > 3 Mon. | > 3 Mon. | > 3 Mon. |
| Phosphorsäure / Ammoniumnitrat | > 3 Mon. | > 3 Mon. | > 3 Mon. | > 3 Mon. |

| | | | | |
|---|---|---|---|---|
| *: Probe bereits bei Herausnehmen aus der Silikonform zerbrochen, kein Beständigkeitstest in Sole möglich | | | | |

**Tabelle 8: Härtung bei Raumtemperatur, Biegefestigkeit σₘ [MPa], Härter im Verhältnis 1:1**

| **Härter** | **Harz 5** | **Harz 6** | **Harz 7** |
|---|---|---|---|
| | butanolverethert, mit Diol | methanolverethert, mit Diol | methanolverethert Wässrige Lösung |
| Maleinsäureanhydrid / Ammoniumnitrat | - | 5,51 | 5,71 |
| Maleinsäureanhydrid / Ammoniumsulfat | - | - | 2,89 |
| Maleinsäureanhydrid / Ammoniumphosphat | - | 1,13 | 1,13 |
| Maleinsäureanhydrid / Ammoniumbromid | - | 6,12 | 6,83 |
| p-Toluolsulfonsäure | 5,56 | **9,53** | 8,83 |
| Methansulfonsäure / Ammoniumnitrat | 3,75 | 6,47 | **7,77** |
| Methansulfonsäure / Ammoniumsulfat | 2,47 | 7,02 | 7,07 |
| Methansulfonsäure / Ammoniumphosphat | 1,81 | 6,78 | 5,44 |
| Methansulfonsäure / Ammoniumbromid | 4,67 | **8,23** | 8,56 |
| Ameisensäure / Ammoniumnitrat | - | 7,09 | - |
| Ameisensäure / Ammoniumsulfat | * | - | - |
| Ameisensäure / Ammoniumphosphat | * | * | * |
| Ameisensäure / Ammoniumbromid | - | **8,73** | - |
| Phosphorsäure / Ammoniumnitrat | - | - | - |

| | | | |
|---|---|---|---|
| *: Probe bereits bei Herausnehmen aus der Silikonform zerbrochen, -: kein Test durchgeführt Werte über 7 MPa sind fett gekennzeichnet | | | |

**Tabelle 9: Zersetzungstemperatur der Probenkörper mit Sand bzw. von Vergleichsproben ohne Sand, gemessen mittels DSC**

| **Härter** | **Harz 5** | **Harz 6** | **Harz 7** | **Harz 8** |
|---|---|---|---|---|
| | butanolverethert, mit Diol | methanolverethert, mit Diol | methanolverethert Wässrige Lösung | Butanolverethert ohne Diol |
| Maleinsäureanhydrid / Ammoniumnitrat, gehärtet bei 140°C | 274°C | 268°C | 263°C | 232°C |
| Maleinsäureanhydrid / Ammoniumnitrat, gehärtet bei RT | 268°C | 281°C | 271°C | 230°C |
| Ammoniumnitrat, gehärtet bei 140°C, nur Harz, ohne Sand | 266°C | 280°C | 273°C | 210°C |

**Tabelle 10: Ergebnisse der anwendungstechnischen Versuche mit modifizierten Harzen**

| Additiv | Ölbeständigkeit | | |
|---|---|---|---|
| | Harz 5 | Harz 6 | Harz 7 |
| Butandiol | < 1 Tag | > 3 Mon. | > 3 Mon. |
| Polytetrahydrofuran | > 3 Mon. | > 3 Mon. | > 3 Mon. |
| Glycerin | < 1 Tag | > 3 Mon. | > 3 Mon. |
| Diethylenglykol | < 1 Tag | > 3 Mon. | > 3 Mon. |
| 3-Aminopropyltriethoxysilan | > 3 Mon. | > 3 Mon. | > 3 Mon. |
| 3-Aminopropyltrimethoxysilan | > 3 Mon. | > 3 Mon. | > 3 Mon. |
| | | | |

| Additiv | Solebeständigkeit | | |
|---|---|---|---|
| | Harz 5 | Harz 6 | Harz 7 |
| Butandiol | < 1 Tag | > 3 Mon. | > 3 Mon. |
| Polytetrahydrofuran | > 3 Mon. | > 3 Mon. | > 3 Mon. |
| Glycerin | < 1 Tag | > 3 Mon. | < 1 Tag |
| Diethylenglykol | < 1 Tag | > 3 Mon. | < 1 Tag |
| 3-Aminopropyltriethoxysilan | > 3 Mon. | > 3 Mon. | > 3 Mon. |
| 3-Aminopropyltrimethoxysilan | > 3 Mon. | > 3 Mon. | > 3 Mon. |
| | | | |

| Additiv | Wasserbeständigkeit | | |
|---|---|---|---|
| | Harz 5 | Harz 6 | Harz 7 |
| Butandiol | < 1 Tag | > 3 Mon. | < 1 Tag |
| Polytetrahydrofuran | < 1 Tag | > 3 Mon. | > 3 Mon. |
| Glycerin | < 1 Tag | > 3 Mon. | < 1 Tag |
| Diethylenglykol | < 1 Tag | > 3 Mon. | < 1 Tag |
| 3-Aminopropyltriethoxysilan | > 3 Mon. | > 3 Mon. | > 3 Mon. |
| 3-Aminopropyltrimethoxysilan | > 3 Mon. | > 3 Mon. | > 3 Mon. |
| | | | |

| Additiv | Biegefestigkeit [MPa] | | |
|---|---|---|---|
| | Harz 5 | Harz 6 | Harz 7 |
| Butandiol | 0,31 | 4,43 | 1,66 |
| Polytetrahydrofuran | 1,48 | 13,88 | 9,82 |
| Glycerin | 0,10 | 3,45 | 0,69 |
| Diethylenglykol | 0,28 | 3,70 | 1,70 |
| 3-Aminopropyltriethoxysilan | 5,56 | 14,67 | 12,09 |
| 3-Aminopropyltrimethoxysilan | 6,12 | 12,94 | 14,64 |

**Tabelle 11: Biegefestigkeit von Proben in Abhängigkeit der Menge von verwendetem Harz; bei zwei angegebenen Werten wurde jeweils eine Doppelbestimmung der Biegefestigkeit vorgenommen; dies gibt einen Eindruck von vom Messfehler**

| Harz 7 Menge bezüglich Sand [Gew. %] | Biegefestigkeit [MPa] |
|---|---|
| 3 Gew. % | 7,2 / 8,6 |
| 7 Gew. % | 14,3 / 12,8 |
| 10 Gew. % | 16,5 |
| 15 Gew. % | 27,6 |
| 25 Gew. % | 29,2/27,8 |

Die Beispiele zeigen, dass die Struktureinheiten (II) aufweisenden Harze 5, 6 und 7 bei allen Tests bessere Ergebnisse erzielen, als das keine Struktureinheiten (II) aufweisende Harz 8. Probekörper mit Harz 8 lassen sich in vielen Fällen nicht ohne Probleme der Form entnehmen und zeigen dann auch im Regelfalle eine geringere Beständigkeit gegenüber Wasser, Öl und Sole. Auch die Temperaturbeständigkeit der Proben mit den Harzen 5, 6 und 7 ist besser.

Mit zunehmender Menge von Harz bezüglich Sand nimmt die Biegefestigkeit der Proben zunächst stark zu, eine Menge von mehr als 15 Gew. % bringt aber kaum noch eine Verbesserung.

## Patentansprüche

1. Verfahren zum Binden von nicht-masssiven oxidischen anorganischen Materialien ausgewählt aus der Gruppe von
• Materialien, welche Partikel aus oxidischen anorganischen Materialien umfassen, sowie
• oxidischen anorganischen Materialien, welche Poren, Risse, Brüche oder Spalten aufweisen,
durch in Kontakt bringen der anorganischen Materialien mit einer härtbaren Zusammensetzung umfassend mindestens ein härtbares, verethertes Aminoplastharz gefolgt von thermischem Aushärten des Harzes, **dadurch gekennzeichnet, dass** es sich bei dem veretherten Aminoplastharz um ein verethertes Harnstoff-Formaldehyd-hlarz handelt, welches Struktureinheiten der allgemeinen Formel (II) oder (I) und (II) 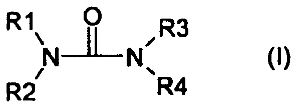 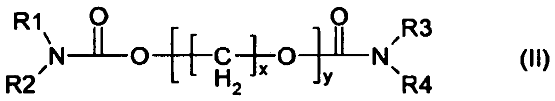 umfasst, wobei
• die Reste R1, R2, R3 und R4 für Substituenten ausgewählt aus der Gruppe von H, -CH₂-OH und -CH₂-OR stehen,
• R' für einen aliphatischen Kohlenwasserstoffrest mit 1 bis 10 Kohlenstoffatomen,
• x für eine Zahl von 2 bis 8, und
• y für eine Zahl von 1 bis 20
mit der Maßgabe, dass es sich bei mindestens einem der Reste R1, R2, R3 und R4 um einen Rest -CH₂-OR' handelt,
wobei man das Aushärten bei einer Temperatur von größer 0°C bis 280°C vornimmt, und wobei es sich um ein Verfahren zum Stabilisieren unterirdischer Formationen aus oxidischen anorganischen Materialien handelt, bei dem man die die härtbare Zusammensetzung in die unterirdische Formation injiziert und unter den in der Formation herrschenden Temperaturen aushärtet.

2. Verfahren gemäß Anspruch 1, **dadurch gekennzeichnet, dass** man die Verbindungen der Formel (II) erhält, indem man Verbindungen der Formel (I) zusätzlich mit einem Dialkohol der allgemeinen Formel 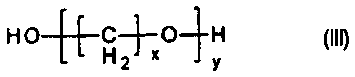 umsetzt.

3. Verfahren gemäß Anspruch 1 oder 2, **dadurch gekennzeichnet, dass** die härtbare Zusammensetzung weiterhin mindestens ein Lösemittel umfasst.

4. Verfahren gemäß Anspruch 3, **dadurch gekennzeichnet, dass** es sich bei den Lösemitteln um Wasser oder ein Wasser-Alkohol-Gemisch handelt.

5. Verfahren gemäß einem der Ansprüche 1 bis 4, **dadurch gekennzeichnet, dass** die härtbare Zusammensetzung weiterhin mindestens einen sauren Härter umfasst.

6. Verfahren gemäß einem der Ansprüche 1 bis 5, **dadurch gekennzeichnet, dass** es sich bei der unterirdischen Formation um eine Sandschicht handelt.

7. Verfahren gemäß Anspruch 6, **dadurch gekennzeichnet, dass** die unterirdische Formation eine Temperatur von 5 bis 200°C aufweist.

8. Verfahren gemäß Anspruch 6 oder 7, **dadurch gekennzeichnet, dass** die eingesetzte härtbare Zusammensetzung eine Viskosität von nicht mehr als 30 mPas, gemessen bei 25°C aufweist.

9. Verfahren gemäß einem der Ansprüche 6 bis 8, **dadurch gekennzeichnet, dass** die eingesetzte härtbare Zusammensetzung weiterhin mindestens ein Silan-Kopplungsreagenz enthält.

## Claims

1. A process for binding non-consolidated oxidic inorganic materials selected from the group consisting of
• materials which comprise particles of oxidic inorganic materials, and
• oxidic inorganic materials which have pores, cracks, fractures or fissures,
by contacting the inorganic materials with a curable composition comprising at least one curable, etherified amino resin, followed by thermal curing of the resin, wherein the etherified amino resin is an etherified ureaformaldehyde resin which comprises structural units of the general formula (II) or (I) and (II) 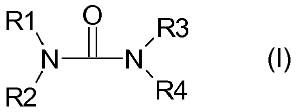 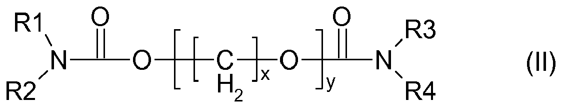 where
• the R1, R2, R3 and R4 radicals are each substituents selected from the group of H, -CH₂-OH and -CH₂-OR',
• R' is an aliphatic hydrocarbyl radical having 1 to 10 carbon atoms,
• x is from 2 to 8, and
• y is from 1 to 20
with the proviso that at least one of the R1, R2, R3 and R4 radicals is a -CH₂-OR' radical,
where the curing is undertaken at a temperature from greater than 0°C to 280°C, and which is a process for stabilizing underground formations composed of oxidic inorganic materials, in which the curable composition is injected into the underground formation and cured at the temperatures which exist in the formation.

2. The process according to claim 1, wherein the compounds of the formula (II) are obtained by reacting compounds of the formula (I) additionally with a dialcohol of the general formula

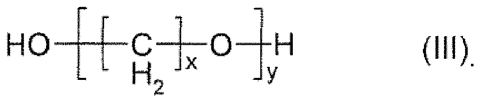

3. The process according to claim 1 or 2, wherein the curable composition further comprises at least one solvent.

4. The process according to claim 3, wherein the solvents are water or a water-alcohol mixture.

5. The process according to any of claims 1 to 4, wherein the curable composition further comprises at least one acidic hardener.

6. The process according to any of claims 1 to 5, wherein the underground formation is a sand layer.

7. The process according to claim 6, wherein the underground formation has a temperature of 5 to 200°C.

8. The process according to claim 6 or 7, wherein the curable composition used has a viscosity of not more than 30 mPas, measured at 25°C.

9. The process according to any of claims 6 to 8, wherein the curable composition used further comprises at least one silane coupling reagent.

## Revendications

1. Procédé de liaison de matières inorganiques oxydes non massives, choisies dans le groupe formé par
- les matériaux qui comprennent des particules de matières inorganiques oxydes, ainsi que
- les matières inorganiques oxydes qui présentent des pores, des fissures, des brisures ou des fentes,
par mise en contact des matières inorganiques avec une composition durcissable comprenant au moins une résine aminoplaste durcissable, éthérifiée, suivie d'un durcissement thermique de la résine, **caractérisé en ce qu'**il s'agit, pour la résine aminoplaste éthérifiée d'une résine d'urée-formaldéhyde éthérifiée, qui comprend des unités de structure de formule générale (II) ou (I) et (II) 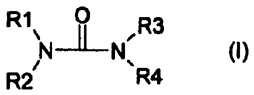 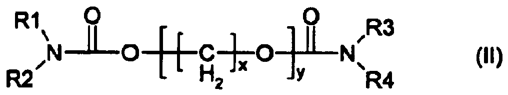 où
- les radicaux R1, R2, R3 et R4 représentent des substituants choisis dans le groupe formé par H, -CH₂-OH et -CH₂-OR',
- R' représente un radical hydrocarboné aliphatique comprenant 1 à 10 atomes de carbone,
- x vaut un nombre de 2 à 8, et
- y vaut un nombre de 1 à 20,
sous réserve qu'il s'agit, pour au moins un des radicaux R1, R2, R3 et R4, d'un radical -CH₂-OR',
en réalisant le durcissement à une température supérieure à 0°C jusqu'à 280°C, et où il s'agit d'un procédé pour la stabilisation de formations sous-terraines en matériaux inorganiques oxydes, dans lequel on injecte la composition durcissable dans la formation sous-terraine et elle durcit aux températures qui règnent dans la formation.

2. Procédé selon la revendication 1, **caractérisé en ce qu'**on obtient les composés de formule (II) **en ce qu'**on transforme des composés de formule (I) en plus avec un dialcool de formule générale

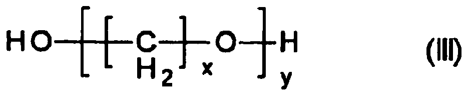

3. Procédé selon la revendication 1 ou 2, **caractérisé en ce que** la composition durcissable comprend en outre au moins un solvant.

4. Procédé selon la revendication 3, **caractérisé en ce qu'**il s'agit pour les solvants d'eau ou d'un mélange eau-alcool.

5. Procédé selon l'une quelconque des revendications 1 à 4, **caractérisé en ce que** la composition durcissable comprend en outre au moins un durcisseur acide.

6. Procédé selon l'une quelconque des revendications 1 à 5, **caractérisé en ce qu'**il s'agit, pour la formation sous-terraine, d'une couche de sable.

7. Procédé selon la revendication 6, carastérisé en ce que la formation sous-terraine présente une température de 5 à 200°C.

8. Procédé selon la revendication 6 ou 7, **caractérisé en ce que** la composition durcissable utilisée présente une viscosité qui n'est pas supérieure à 30 MPa.s, mesurée à 25°C.

9. Procédé selon l'une quelconque des revendications 6 à 8, **caractérisé en ce que** la composition durcissable utilisée contient en outre au moins un réactif de couplage de type silane.
